(19) Europäisches Patentamt

European Patent Office

Office européen des brevets

(11) Numéro de publication: **0 247 920**
**A1**

(12) **DEMANDE DE BREVET EUROPEEN**

(21) Numéro de dépôt: **87401049.9**

(22) Date de dépôt: **07.05.87**

(51) Int. Cl.⁴: **C 04 B 35/46,** H 01 G 4/12, H 01 B 3/12

(30) Priorité: **27.05.86 FR 8607581**

(43) Date de publication de la demande: **02.12.87**
**Bulletin 87/49**

(84) Etats contractants désignés: **DE FR GB IT**

(71) Demandeur: **COMPAGNIE EUROPEENNE DE COMPOSANTS ELECTRONIQUES LCC, 50, rue Jean -Pierre Timbaud B.P. 301, F-92402 Courbevoie (FR)**

(72) Inventeur: **Beauger, Alain, THOMSON-CSF SCPI 19, avenue de Messine, F-75008 Paris (FR)**
Inventeur: **Rossello, Alain, THOMSON-CSF SCPI 19, avenue de Messine, F-75008 Paris (FR)**

(74) Mandataire: **Ruellan-Lemonnier, Brigitte et al, THOMSON-CSF SCPI 19, avenue de Messine, F-75008 Paris (FR)**

(54) Compositions céramiques à haute permittivité.

㊵⑦ La présente invention concerne une composition cérami- que diélectrique à haute permittivité constituée par une phase principale exprimée par la formule générale:

$$(Ba_{1-x} Me_x) (Ti_{1-y} M'e_y) O_3$$

dans laquelle:
Me représente du calcium (Ca),
M'e représente du zirconium (Zr) et/ou de l'étain (Sn) et/ou du manganèse (Mn),
x et y sont respectivement les proportions molaires de Me et M'e avec:

$$0,01 < x < 0,16$$
$$0,01 < y < 0,16$$

et par une phase fusible secondaire comportant 10 à 20% en poids de $SiO_2$, 30 à 60% en poids de PbO, 15 à 35% en poids de CdO, 5 à 20% en poids de $B_2O_3$ et 0 à 2% en poids de $Al_2O_3$.
Elle est utilisée dans les condensateurs.

## COMPOSITIONS CERAMIQUES A HAUTE PERMITTIVITE

La présente invention concerne des compositions céramiques à haute permittivité et plus particulièrement des compositions céramiques à haute permittivité qui peuvent être frittées à une température de frittage relativement basse.

En général, les compositions céramiques diélectriques à base de titanate de baryum qui présentent une haute permittivité, à savoir les compositions céramiques diélectriques de classe Z5U, sont utilisées comme matériau diélectrique pour des condensateurs céramiques à haute permittivité du type disque ou du type multicouches (par compositions céramiques diélectriques de classe Z5U, on entend les compositions pour lesquelles la variation $\Delta C/C$ en fonction de la température est telle que :

$$T = + 10°C \qquad \Delta C/C = + 22 \%$$
$$T = + 85°C \qquad \Delta C/C = - 56 \%).$$

Or, ces compositions céramiques ont une température de frittage comprise entre 1300 et 1400°C, ce qui entraîne une consommation d'énergie importante pour leur réalisation. D'autre part, lorsque ces compositions céramiques sont utilisées dans des condensateurs multicouches, il est nécessaire d'utiliser des métaux nobles tels que le platine ou le palladium pour la réalisation des électrodes internes afin d'assurer un cofrittage de l'ensemble à haute température.

Aussi, un besoin s'est fait sentir pour des compositions céramiques à haute permittivité à base de titanate de baryum qui peuvent être frittées à des températures inférieures à 1200°C. En effet, l'abaissement des températures de frittage de ces compositions céramiques permet d'utiliser, pour les électrodes internes, des alliages à base de palladium et d'argent à forte proportion en argent, ce qui permet de diminuer le coût des électrodes internes. Il est connu d'abaisser les températures de frittage en ajoutant des fondants ou frittes de verre aux compositions céramiques à base de titanate de baryum. Toutefois, pour maintenir une permittivité élevée tout en abaissant la température de frittage de la composition céramique, le fondant contient le plus souvent des éléments coûteux. D'autre part, le fondant ne présente pas toujours une bonne stabilité chimique.

En conséquence, la présente invention a pour but de proposer une nouvelle composition céramique à haute permittivité frittant à basse température dans laquelle le fondant ne présente pas les inconvénients ci-dessus.

La présente invention a donc pour objet une composition céramique diélectrique à haute permittivité caractérisée en ce qu'elle est constituée par une phase principale exprimée par la formule générale :

$$(Ba_{1-x} Me_x) (Ti_{1-y} M'e_y) O_3$$

dans laquelle :

Me représente du calcium (Ca),

M'e représente du zirconium (Zr) et/ou de l'étain (Sn) et/ou du manganèse (Mn),

x et y sont respectivement les proportions molaires de Me et M'e avec :

$$0,01 < x < 0,16$$
$$0,01 < y < 0,16$$

et par une phase fusible secondaire comportant 10 à 20 % en poids de $SiO_2$, 30 à 60 % en poids de PbO, 15 à 35 % en poids de CdO, 5 à 20 % en poids de $B_2O_3$ et 0 à 2 % en poids de $Al_2O_3$.

Avec la composition céramique diélectrique ci-dessus, notamment la phase fusible secondaire ou fritte de verre spécifique, on obtient les avantages suivants, à savoir :

- une densification parfaite,

- le maintien d'une haute permittivité et l'obtention de faibles pertes diélectriques,

- une grande stabilité chimique de la composition céramique frittée, compte tenu des traitements électrochimiques effectués lors du dépôt des terminaisons.

Il est évident pour l'homme de l'art que la stabilité chimique est en étroite corrélation avec le taux de phase fusible incorporée à la phase principale ou chamotte de base et également avec la nature des oxydes choisis. Il sera par conséquent nécessaire d'augmenter la réactivité de la chamotte de base pour améliorer la densification de la céramique afin de diminuer le taux de phase fusible secondaire ou fritte de verre.

Ainsi, selon un mode de réalisation préférentiel, le diélectrique est donc constitué par une chamotte de base ou phase principale à raison de 93 à 98 % et par une phase fusible secondaire ou fritte de verre à raison de 7 à 2 % en poids.

De préférence, les 2 à 7 % en poids de phase secondaire fusible sont constitués par 1 à 3 % en poids d'une fritte de verre contenant essentiellement du cadmium et 1 à 4 % en poids d'une fritte de verre contenant essentiellement du plomb.

Ainsi, la fritte de verre contenant essentiellement du cadmium est constituée par 67,8 % en poids de CdO, 17,7 % en poids de $B_2O_3$, 2,4 % en poids de $Al_2O_3$ et 12,1 % en poids de $SiO_2$ et la fritte de verre contenant essentiellement du plomb est constituée par 74,2 % en poids de PbO, 8,9 % en poids de $B_2O_3$, 0,1 % en poids de $Al_2O_3$ et 16,8 % en poids de $SiO_2$.

D'autre part, les 93 à 98 % en poids de phase principale sont constitués par une chamotte complexe contenant 54 à 58 % en poids de BaO, 3 à 7 % en poids de CaO, 27 à 30 % en poids de $TiO_2$, 5 à 9 % en poids de $ZrO_2$ et 0,1 à 0,3 % en poids de $Mn_3O_4$.

Selon une autre caractéristique de la présente invention, l'ajustement de la classe de température est réalisé en ajoutant certains adjuvants à la composition tels que ZnO à raison de 0 à 0,5 % en poids, $CeO_2$ à raison de 0 à 0,5 % en poids et $Nb_2O_5$ à raison de 0 à 0,6 % en poids, le pourcentage d'adjuvants par rapport à la composition totale pouvant atteindre 1 % en poids.

Les compositions céramiques sont préparées suivant la méthode bien connue de l'homme de l'art par pesée et mélange des matières premières afin d'obtenir une mixture suffisamment homogène pour permettre une réaction complète des éléments entre eux lors du chamottage.

La phase principale est donc réalisée par mélange des éléments suivants : 60 à 64 % en poids de $BaCO_3$, 5 à 6 % en poids

de $CaCO_3$, 24 à 26 % en poids de $TiO_2$, 0,1 à 0,5 % en poids de $Mn_3O_4$ et 5 à 7 % en poids de $ZrO_2$. La synthèse thermique est effectuée à 1150°C pendant deux heures en atmosphère oxydante.

A cette chamotte complexe contenant Ba, Ca, Zr, Ti, Mn, on ajoute la phase fusible et éventuellement les adjuvants nécessaires pour ajuster la classe de température. Ces adjuvants sont constitués par 0 à 0,6 % en poids de $Nb_2O_5$, 0 à 0,5 % en poids de $CeO_2$ et 0 à 0,5 % en poids de ZnO.

La phase fusible ou fritte de verre est composée de la façon suivante :

* de l'oxyde de silicium, de l'oxyde d'aluminium, de l'oxyde de bore et de l'oxyde de cadmium sont mélangés dans les proportions suivantes en poids : 12,1 % ; 2,4 %; 17,7 % ; 67,8 %, puis calcinés à haute température et rebroyés. Ceci constitue une fritte riche en cadmium.

* de l'oxyde de silicium, de l'oxyde d'aluminium, de l'oxyde de bore et de l'oxyde de plomb sont mélangés dans les proportions suivantes en poids : 16,8 % ; 0,1 % ; 8,9 %; 74,2 %, puis calcinés à haute température et rebroyés. La fritte ainsi obtenue est riche en plomb.

Ces deux frittes de verre sont ensuite incorporées à la chamotte complexe de base par mélange en voie aqueuse avec éventuellement les adjuvants nécessaires.

Après séchage, la poudre est pressée sous forme de disques par l'intermédiaire d'un liant, le frittage est conduit en atmosphère oxydante à 1130°C pendant trois heures.

La proportion de fondants est ajustée de façon à ce que la constante diélectrique soit suffisamment élevée tout en maintenant une densification satisfaisante, et ce pour des taux qui ne doivent pas dépasser 7 % en poids, et être inférieurs à 2 % en poids. En effet, pour des taux inférieurs à 2 %, le frittage n'a pas lieu à 1130°C et pour des taux supérieurs à 7 %, on observe une chute des constantes.

La présente invention sera mieux comprise à l'aide des exemples ci-après :

5

Exemples :

On décrira en détail la préparation d'une composition particulière, étant entendu que les suivantes sont réalisées de manière identique.

Les matières premières sont employées couramment en fabrication, et ne sont pas choisies spécialement en vue de l'application Z5U.

250 g au total des carbonates et des oxydes de la phase principale sont mélangés en présence de 400 cc d'eau désionisée et de 600 g de billes de zircone dans un système de type "Attritor".

Après un broyage d'une heure, la barbotine est séchée et la poudre obtenue est chamottée à 1150°C pendant deux heures. La chamotte ainsi obtenue a la composition suivante en poids :

$BaO$ (57,5 %) - $CaO$ (3,99 %) - $TiO_2$ (29,55 %)

$ZrO_2$ (8,76 %) - $Mn_3O_4$ (0,2 %)

La composition diélectrique est ensuite préparée comme il est décrit ci-après :

A 94,67 g de chamotte réalisée précédemment on ajoute 3,13 g de fritte de verre à base de plomb, et 2,2 g de fritte de verre à base de cadmium.

L'ensemble est broyé dans un broyeur "Turbula" pendant deux heures en présence de 60 cc d'eau désionisée et de 100 g de billes de zircone.

Après séchage, le diélectrique est mis en forme après incorporation d'un liant. Les disques obtenus ont un diamètre de 8,35 mm et une épaisseur de 1 mm.

Le frittage est effectué à l'air à une température comprise entre 1120°C et 1130°C pendant trois heures.

Des électrodes en argent sont ensuite déposées sur les deux faces du disque et après frittage, les disques sont mesurés électriquement sous 1 Volt à 1 KHz.

Les résultats des mesures sont donnés dans le tableau ci-après. Sur ce tableau, on a reporté les résultats de l'ensemble des exemples réalisés.

| Exemples | 1 | 2 | 3 | 4 |
|---|---|---|---|---|
| BaO (% en poids) | 57,5 | 57,5 | 57,56 | 54,93 |
| CaO (") | 3,99 | 3,99 | 3,99 | 6,13 |
| $TiO_2$ (") | 29,55 | 29,55 | 29,57 | 28,62 |
| $ZrO_2$ (") | 8,76 | 8,76 | 8,76 | 5,90 |
| $SnO_2$ (") | 0 | 0 | 0 | 3,54 |
| $Mn_3O_4$ (") | 0,2 | 0,2 | 0,12 | 0,13 |
| ZnO (") | 0 | 0 | 0 | 0,36 |
| $Nb_2O_5$ (") | 0 | 0 | 0 | 0,15 |
| $CeO_2$ (") | 0 | 0 | 0 | 0,24 |

| Fondants % en poids par rapport à la chamotte complexe | | | | |
|---|---|---|---|---|
| Fondant au plomb | 3,13 | 2,4 | 2,77 | 3,32 |
| Fondant au cadmium | 2,2 | 1,57 | 1,93 | 2,36 |
| $\varepsilon$ mesurée à 20°C | 4100 | 4600 | 5200 | 4700 |
| $tg\delta \times 10^4$ mesurée à 20°C | 103 | 80 | 112 | 125 |
| Température de frittage | 1120 | 1120 | 1130 | 1120 |
| Variation relative de capacité  + 10°C | − 6 % | − 15 % | − 12 % | − 8 % |
|  + 85°C | − 46 % | − 44 % | − 50 % | − 47 % |

7

Comme on peut le voir à partir du tableau, les compositions selon la présente invention présentent une haute permittivité supérieure à 4000, de faibles pertes diélectriques et peuvent être frittées à des températures inférieures à 1150°C.

REVENDICATIONS

1. Composition céramique diélectrique à haute permittivité caractérisée en ce qu'elle est constituée par une phase principale exprimée par la formule générale :

$(Ba_{1-x} Me_x) (Ti_{1-y} M'e_y) O_3$

dans laquelle :

Me représente du calcium (Ca),

M'e représente du zirconium (Zr) et/ou de l'étain (Sn) et/ou du manganèse (Mn),

x et y sont respectivement les proportions molaires de Me et M'e avec :

$0,01 < x < 0,16$

$0,01 < y < 0,16$

et par une phase fusible secondaire comportant 10 à 20 % en poids de $SiO_2$, 30 à 60 % en poids de PbO, 15 à 35 % en poids de CdO, 5 à 20 % en poids de $B_2O_3$ et 0 à 2 % en poids de $Al_2O_3$.

2. Composition céramique selon la revendication 1, caractérisée en ce qu'elle comporte 93 à 98 % en poids de la phase principale et 7 à 2 % en poids de la phase secondaire fusible.

3. Composition céramique selon la revendication 2, caractérisée en ce que les 2 à 7 % en poids de phase secondaire fusible sont constitués par 1 à 3 % en poids d'une fritte de verre contenant essentiellement du cadmium et 1 à 4 % en poids d'une fritte de verre contenant essentiellement du plomb.

4. Composition céramique selon la revendication 2, caractérisée en ce que les 93 à 98 % en poids de phase principale sont constitués par une chamotte complexe contenant 54 à 58 % en poids de BaO, 3 à 7 % en poids de CaO, 27 à 30 % en poids de $TiO_2$, 5 à 9 % en poids de $ZrO_2$ et 0,1 à 0,3 % en poids de $Mn_3O_4$.

5. Composition céramique selon la revendication 3, caractérisée en ce que la fritte de verre contenant essentiellement du cadmium est constituée par 67,8 % en poids de CdO, 17,7 % en poids de $B_2O_3$, 2,4 % en poids de $Al_2O_3$ et 12,1 % en poids de $SiO_2$.

6. Composition céramique selon la revendication 3, caractérisée en ce que la fritte de verre contenant essentiellement du plomb est constituée par 74,2 % en poids de PbO, 8,9 % en poids de $B_2O_3$, 0,1 % en poids de $Al_2O_3$ et 16,8 % en poids de $SiO_2$.

7. Composition céramique selon l'une quelconque des revendications 1 à 6, caractérisée en ce qu'elle comporte de plus des adjuvants à raison de 0 à 0,6 % en poids de $Nb_2O_5$, 0 à 0,5 % en poids de $CeO_2$ et 0 à 0,5 % en poids de ZnO.

Office européen
des brevets

**RAPPORT DE RECHERCHE EUROPEENNE**

Numero de la demande

EP 87 40 1049

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl 4) |
|---|---|---|---|
| A | GB-A-1 532 374 (SPRAGUE ELECTRIC) <br> * Revendications 1-9 * | 1-7 | C 04 B 35/46 <br> H 01 G 4/12 <br> H 01 B 3/12 |
| | --- | | |
| A | US-A-3 885 941 (G.H. MAHER) <br> * Revendications 1-6; colonne 1, lignes 66-67; colonne 2, lignes 1-7; colonnes 5,6, tableaux 1-4 * | 1-7 | |
| | --- | | |
| A | CHEMICAL ABSTRACTS, vol. 97, no. 12, septembre 1982, page 309, résumé no. 97033b, Columbus, Ohio, US; I. BURN: "Flux-sintered barium titanate(IV) dielectrics", & J. MATER. SCI. 1982, 17(5), 1398-408 | 1-7 | |
| | --- | | DOMAINES TECHNIQUES RECHERCHES (Int. Cl.4) |
| A | US-A-4 379 854 (J.C.K. SOONG) <br> * Revendication 1 * | 1 | C 04 B <br> H 01 G <br> H 01 B |
| | --- | | |
| A | GB-A-2 125 028 (MURATA MFG) <br> * Revendications 1-5; page 3, tableau 1 * | 1 | |
| | ----- | | |

Le present rapport de recherche a été etabli pour toutes les revendications

| Lieu de la recherche | Date d'achèvement de la recherche | Examinateur |
|---|---|---|
| LA HAYE | 03-09-1987 | SCHURMANS H.D.R. |